(19) Europäisches Patentamt
European Patent Office
Office européen des brevets

(11) **EP 2 677 460 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **12405058.4**

(22) Anmeldetag: **20.06.2012**

(51) Int Cl.:
***G06K 9/00*** *(2006.01)*

(54) **Verfahren zur Bestimmung der Länge einer Warteschlange**

Method for determining the length of a queue

Procédé de détermination de la longueur d'une file d'attente

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.12.2013 Patentblatt 2013/52**

(73) Patentinhaber: **Xovis AG**
**CH-3052 Zollikofen (CH)**

(72) Erfinder:
• **Wüthrich, Martin**
**CH-2555 Brügg BE (CH)**
• **Studer, Christian**
**CH-4534 Flumenthal SO (CH)**
• **Studer, David**
**CH-2555 Brügg BE (CH)**
• **Herrli, Markus**
**CH-3112 Allmendingen (CH)**

(74) Vertreter: **Rüfenacht, Philipp Michael et al**
**Keller & Partner Patentanwälte AG**
**Eigerstrasse 2**
**Postfach**
**3000 Bern 14 (CH)**

(56) Entgegenhaltungen:
**WO-A1-2010/055286      US-B2- 7 167 576**

• **KWONG K ET AL: "Arterial travel time estimation based on vehicle reidentification using wireless magnetic sensors", TRANSPORTATION RESEARCH. PART C, EMERGING TECHNOLOGIES, PERGAMON, NEW YORK, NY, GB, Bd. 17, Nr. 6, 1. Dezember 2009 (2009-12-01), Seiten 586-606, XP026522132, ISSN: 0968-090X, DOI: 10.1016/J.TRC.2009.04.003 [gefunden am 2009-05-13]**
• **COIFMAN B ET AL: "Vehicle reidentification and travel time measurement, part 1: congested freeways", INTELLIGENT TRANSPORTATION SYSTEMS, 2001. PROCEEDINGS. 2001 IEEE AUGUST 25-29, 2001, PISCATAWAY, NJ, USA, IEEE, 25. August 2001 (2001-08-25), Seiten 138-143, XP010555759, ISBN: 978-0-7803-7194-1**

**Beschreibung**

**Technisches Gebiet**

Die Erfindung betrifft ein Verfahren zur Bestimmung der Länge einer Warteschlange von Objekten in einem vordefinierten Bereich mit einem Eingang und einem Ausgang sowie eine für die Durchführung dieses Verfahrens geeignete Vorrichtung.

**Stand der Technik**

US 7,167,576 (Point Grey Research) beschreibt ein Verfahren zur Überwachung des Ein-und Austritts von Objekten in einem Bereich, wobei für jedes Objekt eine Signatur erstellt wird. Für die Signaturen werden Bilddaten verwendet, insbesondere Farbhistogramme der Objekte, welche über ein einziges Frame oder auch gemittelt über mehrere Frames bestimmt werden. Beim Abgleich der Signaturen wird eine erfasste Austrittssignatur mit den gespeicherten Eintrittssignaturen verglichen, wobei Signaturen mit der besten Korrelation gemacht werden. Für jedes Objekt wird die Eintritts- und Austrittszeit mit der Signatur gespeichert, wobei anhand der Ein- und Austrittszeit eines Objekts dessen Aufenthaltszeit im Bereich berechnet wird. Bei gewissen Anwendungen kann zur Verbesserung des Abgleichs eine erwartete Zeitspanne für den Aufenthalt eines Objekts als Gewichtungsfaktor verwendet werden, wobei Signaturen, die ausserhalb dieser Zeitspanne liegen, beim Abgleich weniger Gewicht erhalten als Werte, die innerhalb dieser Zeitspanne liegen.

EP 2 104 077 (Ehlert-Doumont Dirk) offenbart ein System zur Bestimmung der Besucherzahl in Versammlungsräumen, wobei an jedem Ein- und Ausgang mittels eines Signalgebers für jeden ein- oder austretenden Besucher ein Signal über eine Zähleinheit an einen Zentralrechner übermittelt wird. Der Zentralrechner ermittelt den Befüllungsstand des Versammlungsraums. Als Signalgeber sind vorzugsweise Handsignalgeber vorgesehen. Als Alternative wird vorgeschlagen, andere Signalgeber zu verwenden, wie beispielsweise Fussmatten, Kameras, Laser oder Lichtschranken. Als Rückmeldung wird über ein Ampelsystem Mitarbeitern an den Zugängen des Versammlungsraums signalisiert, ob anhand des aktuellen Füllstandes weitere Personen eingelassen werden dürfen oder es wird die aktuelle Besucherzahl über Bildschirme angezeigt.

WO 2005/062714 (Countwise LLC) beschreibt ein System zum Detektieren und Zählen von Personen, welche eine Fläche durchschreiten. Das System umfasst mindestens ein Endgerät, welches wenigstens zwei CCD-Kameras oder eine Kamera, welche zwei Bereiche überwachen kann, aufweist. Um Personen zu detektieren, werden Farbveränderungen in Bezug auf den Hintergrund durch die Kameras erfasst. In einem Abgleichsschritt wird bestimmt, ob ein durch eine Farbveränderung detektiertes Objekt bereits im Speicher des Systems vorhanden ist. Durch diesen Abgleich kann das System bestimmen, ob es sich um ein Objekt handelt, welches den überwachten Bereich betritt oder diesen verlässt oder ob es sich um ein Objekt handelt, welches im Bereich verblieben ist. Das System weist verschiedene Zählwerke auf, mit denen die Objekte gezählt werden können, welche den Bereich durchschreiten oder welche den Bereich an einer bestimmten Stelle verlassen.

JP 2001-291184 (Faasuto Create KK) offenbart ein System zur automatischen Auswertung eines Volumenstromes von Objekten in einem definierten Bereich. Eine Vielzahl an Kameras überwacht diesen Bereich. Signaturen der einzelnen erfassten Objekte werden mit gespeicherten Signaturen verglichen um zu bestimmen, ob das erfasste Objekt zu den zu zählenden Objekten gehört. Bei einer Übereinstimmung wird ein Standbild des Objekts in einer Datenbank gespeichert. Durch Zählen der Standbilder kann der Volumenstrom der Objekte bestimmt werden.

WO 2010/055286 (LO-Q PLC., insb. S. 20-21) offenbart ein System zur Schätzung der Länge einer Warteschlange von Objekten in einem vordefinierten Bereich. Die Schätzung basiert auf einer Subtraktion der ausgehenden von der eingehenden Menge (an zwei verschiedenen Punkten ermittelt). Eintritts- und Ausgangssignaturen werden mithilfe von Modulen ermittelt, welche die Objekte (Besucher) selbst tragen. Die ausgehende Menge bei Austritt eines Objekts wird mit der eingehenden Menge zum Eintritt desselben Objekts verglichen. Eine gemittelte Abweichung der beiden Mengen wird anhand mehrerer Objekte ermittelt, und zur Schätzungskorrektur herangezogen.

Das Dokument von Kwong et al., "Aterial travel time estimation based on vehicle reidentification using wireless magnetic sensors", Transportation Research, Part C, Emerging Technologies, 2009 (insb. Abschnitt 3.6) behandelt auch das Problem der Schätzung einer Warteschlangenlänge, aber unter Annahme einer fehlerlosen Erfassung (keine Korrektur). Es findet ein Vergleich (Matching) einzelner Einträge von Ein- und Ausgangslisten statt. Nicht korrespondierende Objekte werden nicht als Fehler betrachtet, sondern als Objekte die zwischen den beiden Sensoren ein- oder austraten.

Das Dokument von Coifman et al., "Vehicle reidentification and travel time measurement, part 1: congested freeways", IEEE Intelligent Transportation Systems Proceedings, 2001 (insb. Abschnitt "Possible Matches and Sequences") behandelt das Problem der Schätzung der mittleren Reisezeit zwischen zwei Punkten entlang einer Fahrbahn. An beiden Stellen wird als einziges Objektmerkmal die Fahrzeuglänge ermittelt und chronologisch gespeichert. Um Objektkorrespondenzen zu finden, wird nach korrespondierenden Sequenzen von Fahrzeuglängen gesucht, und folglich die mittlere Reisezeit errechnet.

Wenn Fehler beim Erfassen der Objekte durch die Systeme nicht erkannt werden kann der tatsächliche Füllstand oder die tatsächliche Länge der Warteschlange (d. h. die Anzahl der Objekte in der Warteschlange) vom errechneten Wert abweichen. Insbesondere bei einer hohen Anzahl an Objekten, die in die überwachten Bereiche ein- oder austreten kann es vorkommen, dass kurz aufeinanderfolgende Objekte nicht voneinander unterschieden werden können und diese durch ein Zählsystem als nur ein Objekt erkannt werden. Selbst wenn die Fehlerrate relativ klein ausfällt, wird bei einem hohen Fluss an Objekten nach einiger Zeit die Differenz des errechneten Füllstandes oder der errechneten Länge der Warteschlange erheblich vom tatsächlichen Wert abweichen.

**Darstellung der Erfindung**

Aufgabe der Erfindung ist es, ein dem eingangs genannten technischen Gebiet zugehörendes Verfahren zu schaffen, bei welchem Fehler in der Erfassung von in einen Bereich ein- oder austretenden Objekten bei der Berechnung der Länge einer Warteschlange automatisch korrigiert wird.

Die Lösung der Aufgabe ist durch die Merkmale des Anspruchs 1 definiert. Gemäss der Erfindung wird eine spezifische Eintrittssignatur $E_i$ von jedem durch den mindestens einen Eingang in den vordefinierten Bereich eintretenden Objekt durch mindestens einen ersten Bildsensor ermittelt. Die spezifische Eintrittssignatur $E_i$ wird in einer Eingangsliste einer Berechnungseinheit gespeichert, wobei jede Eintrittssignatur E, mit einem die zeitlche Abfolge der Eintritte widerspiegelnden Indexwert i versehen wird. Ferner wird ein die Länge der Warteschlange (und damit die Anzahl Objekte in der Warteschlange) widerspiegelnder Wert L um eins erhöht.

Eine spezifische Austrittssignatur A wird für ein durch den mindestens einen Ausgang aus dem vordefinierten Bereich austretendes Objekt durch mindestens einen zweiten Bildsensor ermittelt. Die spezifische Austrittssignatur A wird in einer Austrittsliste der Berechnungseinheit als Austrittssignatur $A_0$ mit Indexwert j=0 gespeichert. Der Indexwert von bereits in der Austrittsliste vorhandenen Austrittssignaturen $A_j$ wird jeweils um eins zu $A_{j+1}$ erhöht, wobei Austrittssignaturen $A_{j+1}$, welche einen Indexwert aufweisen, der grösser ist als ein vorbestimmbarer Wert M, aus der Austrittsliste gelöscht werden. Die Austrittsliste bildet somit die Reihenfolge von den letzten M Objekten ab, die aus dem vordefinierten Bereich ausgetreten sind.

Anschliessend erfolgt durch die Berechnungseinheit eine Berechnung von Ähnlichkeitswerten $C_n$ für $-N \leq n \leq +N$. N ist ein vorbestimmbarer Wert, der eine bestimmte Anzahl N an Eintrittssignaturen von Objekten definiert, die vor oder nach dem Objekt mit der Eintrittssignatur $E_L$ aus dem vordefinierten Bereich austreten werden beziehungsweise bereits ausgetreten sind, wobei die Eintrittssignatur $E_L$ die Signatur desjenigen Objekts darstellt, dessen Austritt aufgrund der Länge der Warteschlange L als nächstes erwartet wird. Für die Berechnung der Ähnlichkeitswerte werden jeweils Ähnlichkeitsmasse $U_m$ zwischen einer Austrittssignatur $A_m$ und

einer Eintrittssignatur $E_{L+m+n}$ berechnet. m läuft dabei von 0 bis M. Zur Berechnung der Ähnlichkeitswerte $C_n$ werden die Ähnlichkeitsmasse $U_{mn}$ aufaddiert.

Der vorbestimmbare Wert N hängt von der erwarteten Fehlerhäufigkeit der eingesetzten Sensoren ab. Vorzugsweise entspricht der Wert N der maximalen Anzahl an Signaturen, in denen aufgrund der Fehlerhäufigkeit der Sensoren kein Fehler zu erwarten ist.

In einer Formel ausgedrückt erfolgt die Berechnung der Ähnlichkeitswerte $C_n$ gemäss:

$$C_n = \sum_{m=0}^{M} U_{mn} = \sum_{m=0}^{M} F(E_{L+m+n}, A_m)$$

wobei F eine Funktion zur Bestimmung des Ähnlichkeitsmasses darstellt.

Die verwendete Funktion ist eine Abwandlung der einem Fachmann bekannten Kreuzkorrelationsfunktion zwischen den Eintrittssignaturen und den Austrittssignaturen. Beim erfindungsgemässen Verfahren werden demnach nicht Ähnlichkeitswerte zwischen einzelnen Signaturen ermittelt, sondern es wird die Ähnlichkeit zwischen zwei Signatursequenzen, welche je aus einer Mehrzahl an Signaturen bestehen, berechnet.

Zur Berechnung der Ähnlichkeitsmasse $U_{mn}$ kann grundsätzlich jede geeignete Funktion verwendet werden. Je nach verwendeten Signaturen wird eine andere Funktion zur Bestimmung der Ähnlichkeitsmasse $U_{mn}$ am besten geeignet sein.

Nach der Berechnung der Ähnlichkeitswerte $C_n$ wird der Wert L um eins dekrementiert. Die durch das Verfahren bestimmte Länge der Warteschlange wird demnach um das austretende Objekt verkleinert.

In einem letzten Schritt erfolgt eine Korrektur des Wertes L durch Vergleich der Ähnlichkeitswerte $C_n$ mit dem Ähnlichkeitswert $C_0$. Bei Vorliegen eines Wertes $C_x$ mit Indexwert n=x der eine höhere Ähnlichkeit anzeigt, als der Ähnlichkeitswert $C_0$, erfolgt eine Korrektur des Wertes L durch Addition des Indexwertes x.

Der Ähnlichkeitswert $C_0$ entspricht dem Ähnlichkeitswert, bei dem die Ähnlichkeitsmasse zwischen den Signaturen $A_0$ bis AM mit $E_L$ bis $E_{L+M}$ berechnet werden, wobei n=0 ist. Bei einer fehlerlosen Erfassung aller Eintrittssignaturen und aller Austrittssignaturen sollten diese Signaturen genau miteinander übereinstimmen, der berechnete Ähnlichkeitswert also maximal sein. Zeigt jedoch ein anderer Ähnlichkeitswert $C_x$ eine grössere Ähnlichkeit auf, so kann darauf geschlossen werden, dass die Abfolge der Austrittssignaturen in der Austrittsliste nicht mehr mit der Abfolge der Eintrittssignaturen in der Eintrittsliste von $E_L$ bis $E_M$ übereinstimmen. Die Signaturen werden um x "Plätze" in der Eintrittsliste gegeneinander verschoben sein. Dies deutet darauf hin, dass durch den Eintritts- oder den Austrittssensor einzelne Objektsignaturen nicht oder falsch erfasst wurden. Um die beiden Signaturabfolgen der Austrittsliste und der Eintrittsliste von $E_L$ bis $E_M$ in Übereinstimmung zu bringen, wird der Wert L um den Wert von x durch Addition desselben korrigiert.

Die Eintrittssignaturen $E_i$ in der Eintrittliste können über den Indexwert i fortlaufend nummeriert werden, so dass die letzte erfasste Eintrittssignatur den höchsten Indexwert $i_{max}$ aufweist. Die Eintrittssignatur $E_L$ entspricht bei dieser Indexierung $E_{imax-L}$.

Bevorzugt erfolgt die Indexierung der Eintrittssignaturen $E_i$ in der Eintrittsliste jedoch analog zur Indexierung der Austrittsliste. Die letzte erfasste Eintrittssignatur erhält den Indexwert i=0, während die Indexwerte aller bereits in der Eintrittsliste vorhandenen Eintrittssignaturen $E_i$ um eins zu $E_{i+1}$ erhöht werden. Bei dieser Indexierung entspricht $E_L$ dem Eintrittsindex $E_i$, bei dem i=L ist.

Um Speicherplatz zu sparen, kann die Anzahl der in der Eintrittsliste gespeicherten Eintrittssignaturen $E_i$ beschränkt werden. Um das erfindungsgemässe Verfahren durchführen zu können, sollten aber mindestens L+M+N an Eintrittssignaturen $E_i$ in der Eintrittsliste gespeichert werden.

Gegenüber einem Vergleich von einzelnen Signaturen gegeneinander weist das erfindungsgemässe Verfahren den Vorteil auf, dass sich durch die Berechnung von Ähnlichkeitswerten einer Austrittsliste mit mehreren Austrittssignaturen mit einer Liste mit Eintrittssignaturen statistisch viel robustere Werte erhalten lassen.

Je nach Winkel der Objekte zu den Sensoren kann es vorkommen, dass sich die Eintrittssignatur $E_i$ und die Austrittssignatur A desselben Objekts unterscheiden. Durch eine entsprechende Platzierung der Sensoren kann der Einfluss des Winkels zu den Objekten auf die erfasste Signatur minimiert werden. Auch können die Signaturen aus mehreren hintereinander aufgenommenen Bildern (frames) berechnet werden, womit eine gemittelte Signatur des Objekts erzeugt wird, bei der sich unterschiedliche Winkel zwischen Objekt und Sensor weniger stark auf die Signatur auswirken.

Unter einem "besseren" Ähnlichkeitswert wird in der vorliegenden Anmeldung verstanden, dass der "bessere" Wert eine grössere Übereinstimmung der Signaturen anzeigt als ein "schlechterer" Wert. Je nach verwendetem Ähnlichkeitsmass kann ein im Vergleich von zwei Ähnlichkeitswerten kleinerer Wert eine grössere Übereinstimmung der Signaturen anzeigen oder umgekehrt.

Die Länge der Warteschlange ergibt sich aus dem Wert L, welcher bei jedem Ein- und Austritt eines Objekts um den Wert eins erhöht beziehungsweise verkleinert wird. Zudem erfolgt bei einer Verschiebung der Austrittsliste gegenüber der Eintrittsliste eine Korrektur dieses Wertes, um Erfassungsfehler der eingesetzten optischen Sensoren bei der Ermittlung der Länge L der Warteschlange zu korrigieren.

Die Eintrittsliste bildet die Warteschlange im vordefinierten Bereich ab, wobei jedes Objekt anhand der gespeicherten Eintrittssignatur eindeutig identifiziert werden kann.

Das erfindungsgemässe Verfahren erlaubt es, Fehler in der Reihenfolge der austretenden Objekte in Bezug auf die Reihenfolge der eintretenden Objekte anhand eines Vergleichs von Ähnlichkeitswerten von Signaturen der Austrittsliste mit einer bestimmten Anzahl an Signaturen der Eingangsliste zu ermitteln. Durch die anschliessende Korrektur des Wertes L lässt sich die Länge einer Warteschlange präzis ermitteln, wobei Erfassungsfehler der optischen Sensoren korrigiert werden.

Bevorzugt werden die berechneten Ähnlichkeitswerte $C_n$ zu korrespondierenden Histogrammwerten $K_n$ einer Histogrammliste aufaddiert. Entsprechend erfolgt eine Korrektur des Wertes L nur dann, wenn ein Histogrammwert $K_x$ mit Indexwert x eine höhere Ähnlichkeit anzeigt, als der Histogrammwert $K_0$.

Durch das Aufaddieren von in mehreren Berechnungsrunden bestimmten Ähnlichkeitswerten $C_n$ zu einem Histogrammwert $K_n$ ist es möglich, eine Korrektur des Wertes L nicht nur anhand eines einzigen Vergleichs der Austrittsliste mit der Eingangsliste vorzunehmen, sondern diese Korrektur auf einen Trendwert abzustützen.

Vorzugsweise erfolgt eine Berechnung der Ähnlichkeitswerte $C_n$ nicht nach jedem Austritt eines Objekts aus dem vordefinierten Bereich, sondern jeweils nur nach einer vorbestimmbaren Anzahl von Austritten. Insbesondere erfolgt die Berechnung der Ähnlichkeitswerte $C_n$ nur jeweils nach fünf, zehn oder fünfzehn erfassten Austrittssignaturen A

Da die Objekte nach jedem Austritt nur einen "Platz" in der Warteschlange vorgerückt sind, werden die Ähnlichkeitswerte von zwei aufeinanderfolgenden Berechnungen nur einen geringen Unterschied aufweisen. Erfolgt hingegen eine neue Berechnung der Ähnlichkeitswerte $C_n$ nachdem einige Objekte aus dem vordefinierten Bereich ausgetreten sind (und entsprechend auch einige eingetreten sind), so werden die berechneten Ähnlichkeitswerte $C_n$ grössere Unterschiede aufweisen, welche sich entsprechend einfacher detektieren lassen.

Das Intervall zwischen den Berechnungen kann je nach Anwendungsbereich unterschiedlich gewählt werden. Sollen beispielsweise Objekte erfasst werden, bei denen in den meisten Fällen ähnliche Signaturen zu erwarten sind, wird ein entsprechend grösseres Intervall gewählt, da dann eine grössere Wahrscheinlichkeit besteht, bei zwei aufeinanderfolgenden Berechnungen der Ähnlichkeitswerte $C_n$ ein Objekt in der Austrittsliste oder im Bereich $E_{L\pm N}$ der Eingangsliste zu haben, welches eine unterscheidungskräftigere Signatur aufweist, als die anderen Objekte.

Bevorzugt erfolgt eine Korrektur des Wertes L nur, falls ein Ähnlichkeitswert $C_x$ oder ein Histogrammwert $K_x$ eine höhere Ähnlichkeit anzeigt, welche mindestens um einen vorbestimmbaren Wert Q höher ist, als der Ähnlichkeitswert $C_0$ beziehungsweise der Histogrammwert $K_0$.

Die Vorgabe eines Wertes Q, um den ein Ähn-

lichkeitswert $C_x$ oder ein Histogrammwert $K_x$ mindestens besser sein muss, um eine entsprechende Korrektur des Wertes L zu veranlassen, stellt sicher, dass eine Korrektur nur erfolgt, wenn ein deutlicher Unterschied zwischen zwei Werten vorliegt. Dadurch wird verhindert, dass nur zufällige oder statistisch nicht eindeutige Unterschiede zwischen zwei Ähnlichkeits- oder Histogrammwerten zu einer fälschlichen Korrektur des Wertes L führen. Dadurch wird die Zuverlässigkeit des erfindungsgemässen Verfahrens zusätzlich erhöht.

Der Faktor Q ist abhängig vom verwendeten Ähnlichkeitsmass sowie der gewählten Skalierungen derselben. Ausserdem lässt sich über den Faktor Q die Sensibilität des Verfahrens einsteiien.

Beim erfindungsgemässen Verfahren sind die Objekte vorzugsweise Personen. Zur Erfassung von optischen Signaturen bei Personen sind verschiedenste Verfahren bekannt. Beispielsweise kann anhand der durch die mindestens zwei Bildsensoren erfassten Bilder von Personen durch einen Gesichtserkennungsalgorithmus eine eindeutige Signatur erzeugt werden. Ferner lassen sich als Signatur auch die unterschiedlichen Texturen der Objekte verwenden. Als weiteres Beispiel kann auch eine Längenausdehnung des Objekts, z. B. die Grösse einer Person oder die Länge eines Fahrzeugs, als Signatur verwendet werden.

Insbesondere eignet sich das erfindungsgemässe Verfahren demnach zur Bestimmung von Personenzahlen in einer Warteschlange. Studien haben ergeben, dass Personen die Wartezeit als erheblich angenehmer empfinden, wenn sie über eine ungefähre Angabe der voraussichtlichen Wartezeit verfügen. Daher eignet sich das Verfahren, um anhand der Länge L der Warteschlange die ungefähr zu erwartende Wartezeit zu berechnen und auszugeben.

Alternativ kann das erfindungsgemässe Verfahren auch verwendet werden, um andere Objekte zu zählen, beispielsweise die Anzahl von Fahrzeugen, die sich auf einem bestimmten Strassenabschnitt befinden.

Bevorzugt sind durch die Bildsensoren erfassten Eintrittssignaturen $E_i$ und Austrittssignaturen A Farbsignaturen der Objekte. Farbsignaturen lassen sich im Unterschied zu anderen Bildsignaturen relativ schnell und mit relativ geringer Rechenkapazität bestimmen. Dem Fachmann sind verschiedene geeignete Algorithmen zur Bestimmung von Farbsignaturen bekannt. Eine beispielhafte Übersicht von geeigneten Algorithmen findet sich beispielsweise in Y.Rubner et al.: The Earth Mover's Distance as a metric for Image Retrieval"; International Journal of Computer Vision: 40(2); 99-121; 2000.

Besonders bevorzugt werden als Farbsignaturen Farbmittelwerte der Objekte verwendet. Derartige Farbsignaturen bestehen nur aus den drei Mittelwerten für die Grundfarben Rot, Grün und Blau. im Vergleich zu anderen Bildsignaturen ist die Verwendung von Farbmittelwerten viel weniger aufwändig und benötigt nicht so viel Rechenleistung. Trotzdem sind Signaturen mit Farbmittelwerten genug unterscheidungskräftig, um einzelne Objekte zuverlässig voneinander unterscheiden zu können.

Die Ähnlichkeitsmasse $U_{mn}$ werden vorzugsweise anhand eines Distanzvektors zwischen der Austrittssignatur Am und der Eintrittssignatur $E_{L+m+n}$ in einem mehrdimensionalen Farbraum berechnet. Insbesondere erfolgt die Berechnung in einem dreidimensionalen Farbraum.

Die Austrittssignatur Am sowie die Eintrittssignatur $E_{L+m+n}$ können in einem beliebigen Farbraum dargestellt werden, wie beispielsweise dem RGB-, dem HSL-, YCbCr oder einem sphärischen Farbraum.

Der Distanzvektor kann alternativ weiter in ein Gütemass umgerechnet werden, damit geringe Ähnlichkeitsmasse, d.h. Signaturen, die im Farbraum weit voneinander entfernt sind, weniger Gewicht erhalten als Signaturen, welche im Farbraum näher beieinander liegen. Experimentell hat sich gezeigt, dass eine Exponentialfunktion dazu besonders geeignet ist:

$$P = \exp\left(-\alpha \left| \vec{D}^2 \right| \right)$$

wobei P das Gütemass zwischen der Eintrittssignatur $E_{L+m+n}$ und der Austrittssignatur $A_m$ und D der Distanzvektor zwischen der Eintrittssignatur $E_{L+m+n}$ und der Austrittssignatur $A_m$ im dreidimensionalen Farbraum darstellen.

Ferner kann die Berechnung des Gütemasses durch Verwendung von am Einsatzort einer zur Durchführung des Verfahrens geeigneter Vorrichtung experimentell zu bestimmenden Skalierungsfaktors $\alpha$ weiter angepasst werden.

Das Distanzvektor oder das Gütemass können anschliessend als Ähnlichkeitsmass verwendet werden.

Bevorzugt werden die Ähnlichkeitsmasse durch einen Earth-Movers-Distance Algorithmus bestimmt. Dem Fachmann sind verschiedenste geeignete Verfahren bekannt, um Ähnlichkeitsmasse zwischen zwei Bildsignaturen zu berechnen. Eine beispielhafte Übersicht von geeigneten Verfahren findet sich z.B. in Y.Rubner et al.: The Earth Mover's Distance as a metric for Image Retrieval"; International Journal of Computer Vision; 40(2); 99-121; 2000.

Vorzugsweise wird aufgrund der ermittelten Länge L der Warteschlange eine voraussichtliche Verweilzeit neu in den vordefinierten Bereich eintretender Objekte berechnet und ausgegeben. Bevorzugt wird die voraussichtliche Wartezeit durch eine Anzeigevorrichtung bei wenigstens einem Eingang angezeigt.

Beispielsweise kann anhand von empirisch ermittelten durchschnittlichen Wartezeiten bei bestimmten Warteschlangenlängen die voraussichtliche Wartezeit ermittelt werden. Alternativ kann auch eine durchschnittliche Zeit zwischen zwei Austritten von Objekten am Ausgang gemessen werden und anhand dieses Wertes die zu erwartende Verweilzeit im vordefinierten Bereich berechnet werden. Als Anzeigevorrichtung kann dabei eine Anzeigetafel, ein Display oder jede andere geeignete Anzeigevorrichtung verwendet werden. Durch die Anzeigevorrichtung können beispielsweise Personen über die voraussichtliche Wartezeit in einer Warteschlange, wie beispielsweise vor einem Schalter oder einer Sicherheitskontrolle, informiert werden.

Bevorzugt wird für jedes in den vordefinierten Bereich eintretende Objekt zusätzlich zur Eintrittssignatur $E_i$ die Eintrittszeit $T_i$ gespeichert. Anhand der gespeicherten Eintrittszeiten $T_i$ und den Austrittszeiten der Objekte wird eine durchschnittliche Verweilzeit der Objekte berechnet und vorzugsweise ausgegeben. Die ermittelten durchschnittlichen Verweilzeiten der Objekte können beispielsweise für statistische Auswertungen verwendet werden.

Um den Effekt von unterschiedlichen Lichtverhältnissen zu reduzieren, können die Eintrittssignaturen $E_i$ oder die Austrittssignaturen A mit einem Korrekturalgorithmus verändert werden, bevor diese gespeichert oder für die Berechnung eines Ähnlichkeitsmasses $U_{mn}$ verwendet werden. Der Korrekturalgorithmus muss dabei vor der Anwendung des erfindungsgemässen Verfahrens je nach Einsatzort mit den vorherrschenden Lichtverhältnissen geeicht werden. Der Korrekturalgorithmus kann dabei auch derart ausgelegt sein, dass dieser nicht nur Lichteinflüsse, die aufgrund der unterschiedlichen Standorte der Sensoren entstehen, kompensiert, sondern dass auch je nach Tageszeit sich ändernde Lichtverhältnisse korrigiert werden. Eine derartige Eichung des Korrekturalgorithmus erfolgt vorzugsweise durch Korrelation von Signaturen mindestens eines Eichobjektes im Ein- und Ausgang des vordefinierten Bereichs, wobei durch Bestimmung der Abweichungen der erfassten Signaturen zueinander oder zu einer Eichsignatur des Eichobjektes der Korrekturalgorithmus angepasst werden kann.

Ein beispielhafter Korrekturalgorithmus ist in B.Prosser et al: "Multi-camera Matching under Illumination Change over Time"; Worshop on Mulit-camera and Multi-modal Sensor Fusion Algorithms and Applications - M2SFA2; 2008 beschrieben.

Ein weiterer Aspekt der vorliegenden Erfindung betrifft eine Vorrichtung zur Bestimmung der Länge einer Warteschlange von Objekten in einem vordefinierten Bereich mit einem Eingang und einem Ausgang gemäss dem erfindungsgemässen Verfahren. Die Vorrichtung umfasst mindestens zwei Bildsensoren. Diese sind derart angeordnet, dass wenigstens ein erster Bildsensor durch den Eingang in den Bereich eintretende Objekte und wenigstens ein zweiter Bildsensor durch den Ausgang aus dem Bereich austretende Objekte erfasst. Ferner weist die Vorrichtung eine Berechnungseinheit auf, welche anhand der erfassten ein- und austretenden Objekte die Länge der Warteschlange der Objekte im vordefinierten Bereich berechnet. Die Berechnungseinheit oder die Bildsensoren sind derart konfiguriert, dass für jedes ein- und austretende Objekt eine spezifische Signatur ermittelt wird.

Die Eingangs- und Ausgangssignaturen können entweder direkt in den mindestens zwei Bildsensoren erfasst und anschliessend an die Berechnungseinheit weitergeleitet werden. Dabei müssen die mindestens zwei Bildsensoren über geeignete Mittel verfügen, um aus den aufgenommenen Bildern entsprechende Signaturen zu bestimmen, beispielsweise über einen Mikrochip.

Alternativ kann die Berechnungseinheit anhand der von den mindestens zwei Bildsensoren erhaltenen Bilder die Ein- und Ausgangssignaturen bestimmen. Dies erlaubt den Einsatz von relativ einfachen und handelsüblichen Bildsensoren. Die Berechnungseinheit ist vorzugsweise mit unterschiedlichen Schnittstellen ausgestattet, um mit einer Vielzahl an handelsüblichen Bildsensoren kompatibel zu sein.

Die Berechnungseinheit ist bevorzugt ein Computer, welcher mit einer entsprechenden Software ausgestattet ist. Alternativ kann die Berechnungseinheit auch aus einem integrierten Schaltkreis bestehen, der zum Ausführen des erfindungsgemässen Verfahrens ausgelegt ist.

Die Bildsensoren übermitteln Signaturdaten beziehungsweise Bilddaten vorzugsweise über ein Netzwerk an die Rechnereinheit. Dabei kann es sich um ein beliebiges Netzwerk handeln, welches über eine genügende Datentransferleistung verfügt, um eine möglichst verzögerungsfreie Übertragung der Daten von den mindestens zwei Bildsensoren zur Berechnungseinheit zu ermöglichen. Vorzugsweise handelt es sich um ein kabelgebundenes LAN (local area network), welches auf den Ethernet-Spezifikationen beruht. Ferner können die Daten auch über ein kabelloses Netzwerk, welches bevorzugt auf dem IEEE 802.11 Standart beruht, übertragen werden. Um die nötige Datensicherheit zu gewährleisten, sollte bei einer kabellosen Übertragung eine geeignete Verschlüsselung der Daten verwendet werden. Bei einer Datenübertragung über ein Netzwerk können auch mehrere erfindungsgemässe Vorrichtungen mit einer einzigen Berechnungseinheit verbunden sein, wobei die Zuordnung der Bildsensoren zu spezifischen, unterschiedlichen vordefinierten Bereichen anhand von deren Netzwerkadresse erfolgt. Alternativ können die Bildsensoren auch direkt mit der Berechnungseinheit verbunden sein, z.B. über Koaxialkabel oder über Glasfaserkabel.

Bevorzugt sind die mindestens zwei Bildsensoren digitale Kameras. Digitale Bilder eignen sich besonders gut zur Erfassung der Ein- und Ausgangssignaturen, da diese ohne vorangehende Umwandlung durch die Berechnungseinheit verarbeitet werden können. Ausserdem sind digitale Kameras mit verschiedensten Auflösungen und Optiken am Markt erhältlich, wodurch je nach Einsatzgebiet für die erfindungsgemässe Vorrichtung eine passende digitale Kamera eingesetzt werden kann. Alternativ können auch andere Bildsensoren eingesetzt werden, wie beispielweise ein "PT1 Vision Sensor" der von der Anmelderin vertrieben wird.

Die wenigstens eine Berechnungseinheit ist vorzugsweise in mindestens einem der Bildsensoren integriert. Dies ermöglicht einen möglichst einfachen Aufbau der Vorrichtung, da für die Berechnungseinheit kein zusätzliches Gerät installiert werden muss. Die Berechnungseinheit kann physisch auf mindestens einem Bildsensor angebracht werden, z.B. als Aufsteckmodul. Alternativ kann jedoch auch im mindestens einen Bildsensor selbst ein entsprechender Schaltkreis integriert sein, welcher als Berechnungseinheit dient. Es kann auch vorgesehen sein, dass alle Bildsensoren über eine entsprechende Berechnungseinheit verfügen, wobei im Einsatz jeweils ein Bildsensor als Master-Bildsensor konfiguriert werden kann, der die Berechnung durchführt oder die Berechnungseinheiten der anderen Bildsensoren bei der Berechnung koordiniert.

Ein weiterer Aspekt der vorliegenden Erfindung liegt in der Verwendung des oben beschriebenen erfindungsgemässen Verfahrens zum Betrieb einer Vorrichtung zur Bestimmung der Länge einer Warteschlange in einem vordefinierten Bereich.

Durch die Verwendung des erfindungsgemässen Verfahrens kann die Bestimmung der Länge einer Warteschlange sehr genau erfolgen, da Erfassungsfehler der Bildsensoren korrigiert werden, so dass die berechnete Länge der tatsächlichen Länge entspricht.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1      Eine schematische Darstellung einer erfindungsgemässen Vorrichtung;

Fig. 2      ein schematischer Ablauf des erfindungsgemässen Verfahrens;

Fig. 3a, 3b    zwei graphische Darstellungen von berechneten Ähnlichkeitswerten $C_n$.

Grundsätzlich sind in den Figuren gleiche Teile mit gleichen Bezugszeichen versehen.

**Wege zur Ausführung der Erfindung**

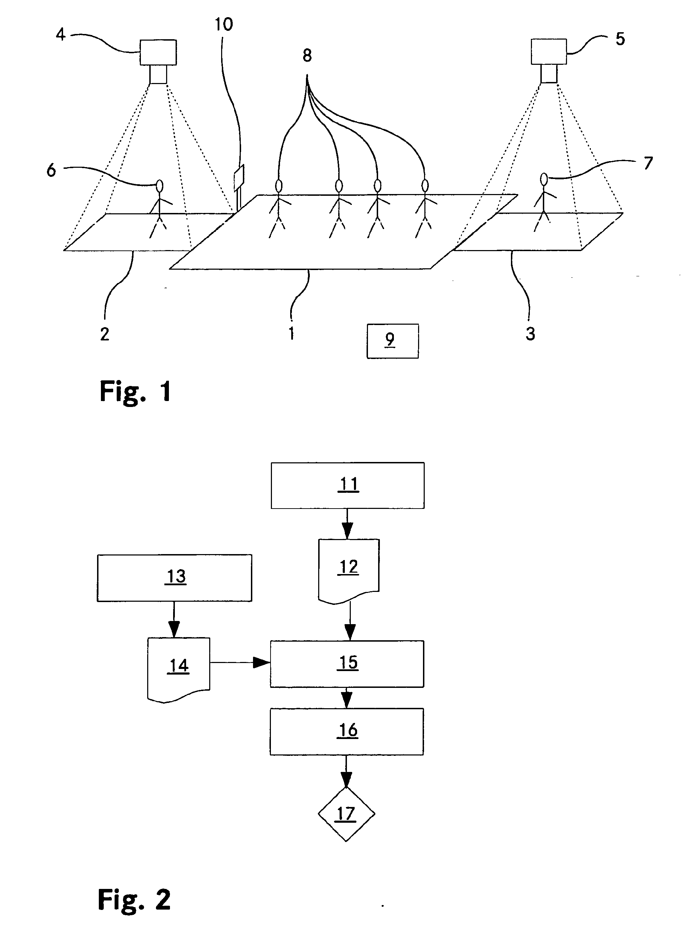

Die Figur 1 zeigt eine erfindungsgemässe Vorrichtung in einer schematischen Ansicht. Die Vorrichtung verfügt über einen Eingangsbildsensor 4, der derart angeordnet ist, dass dieser durch einen Eingang 2 in einen definierten Bereich 1 eintretende Objekte 6 erfassen kann. Ferner umfasst die Vorrichtung einen Ausgangsbildsensor 5, der derart angeordnet ist, dass dieser durch einen Ausgang 3 aus dem vordefinierten Bereich 1 austretende Objekte 7 erfassen kann. Die Objekte 6, 7, 8 sind im vorliegenden Beispiel als Personen dargestellt. Die Vorrichtung verfügt weiter über eine Berechnungseinheit 9, welche vom Eingangsbildsensor 4 sowie vom Ausgangsbildsensor 5 übermittelte Bilddaten empfängt und die Länge L der Warteschlange der Objekte 8 im vordefinierten Bereich 1 berechnet.

Die Übertragung der Bilddaten erfolgt vorzugsweise über ein Netzwerk (nicht dargestellt). Anhand der übermittelten Bilddaten bestimmt die Berechnungseinheit 9 für jedes eintretende Objekt 6 eine Eintrittssignatur $E_i$, welche in einer Eingangsliste gespeichert wird. Für jedes erfasste austretende Objekt 7 wird anhand des vom Ausgangsbildsensor 5 an die Berechnungseinheit übermittelten Bildes eine Austrittssignatur A ermittelt und in einer Austrittsliste gespeichert.

Um die Länge L der Warteschlange der Objekte 8 zu berechnen, kann bei fehlerfreiem Arbeiten der beiden Bildsensoren 4, 5 sowie einer linearen Bewegung der Objekte 8 im vordefinierten Bereich 1 durch Subtraktion der Anzahl an erfassten austretenden Objekten 7 von der Anzahl der erfassten eintretenden Objekte 6 berechnet werden. Da bei der Erfassung durch die Bildsensoren 4, 5 jedoch üblicherweise Fehler auftreten, kann es vorkommen, das ein- oder austretende Objekte 6, 7 nicht oder doppelt erfasst werden. Auch kann es vorkommen, dass einzelne Objekte 8 im vordefinierten Bereich 1 einander überholen. Um derartige Fehler bei der Bestimmung der Länge L der Warteschlange zu korrigieren, berechnet die Berechnungseinheit 9 bei einem Austritt eines Objekts 7 Ähnlichkeitswerte $C_n$ zwischen der Austrittsliste und einem Bereich der Eingangsliste mit N Objekten, welche vor dem letzten erfassten austretenden Objekt 7 aus dem vordefinierten Bereich 1 ausgetreten sind sowie N nach diesem Objekt in den vordefinierten Bereich 1 eingetretenen Objekten. Bei einer fehlerlosen Erfassung der eintretenden Objekte 6 und der austretenden Objekte 7 durch die optischen Sensoren 4, 5 sollte die Reihenfolge der Objekte in der Austrittsliste mit der Reihenfolge der N Objekte, die vor dem letzten aus dem vordefinierten Bereich 1 ausgetretenen Objekts aus dem vordefinierten Bereich 1 ausgetreten sind, übereinstimmen. Stellt die Berechnungseinheit anhand der berechneten Ähnlichkeitswerte $C_n$ eine Verschiebung der Reihenfolge fest, wird die Länge L der Warteschlange entsprechend korrigiert.

Die Figur 2 zeigt eine schematische Darstellung einer Ausführungsform des erfindungsgemässen Verfahrens. Von einem eintretenden Objekt 6 wird in einem Eintrittserfassungsschritt 11 eine Eintrittssignatur $E_i$ erfasst. Vorzugsweise wird vom eintretenden Objekt 6 ein Farbmittelwert für die drei Grundfarben Rot, Blau und Grün berechnet. Diese Eintrittssignatur $E_i$ wird anschliessend in der Eintrittsliste 12 gespeichert. Die Erfassung einer Eintrittssignatur $E_i$ sowie deren Speicherung in der Eintrittsliste 12 erfolgt für jedes eintretende Objekt 6. Dabei erhält jede Eintrittssignatur $E_i$ einen die Reihenfolge ihres Eintritts widerspiegelnden Indexwert i. Dadurch lässt sich die Reihenfolge der eintretenden Objekte 6 in den vordefinierten Bereich 1 in der Eintrittsliste 12 nachbilden. Zusätzlich wird ein Wert L, der die Länge der Warteschlange der Objekte 8 im vordefinierten Bereich 1 widerspiegelt, um den Wert eins erhöht. Vorzugsweise wird die Eintrittsliste 12 vor jeder Inbetriebnahme einer zur Durchführung des Verfahrens geeigneten Vorrichtung gelöscht sowie der Wert L auf einen Initialwert zurückgesetzt.

Für jedes austretende Objekt 7 wird in einem Ausgangserfassungsschritt 13 eine Austrittssignatur A erfasst. Die Erfassung der Austrittssignatur A erfolgt mit demselben Verfahren wie die Erfassung der Eintrittssignaturen $E_i$. Jede erfasste Austrittssignatur A wird in einer Austrittsliste 14 gespeichert. Die Signatur des letzten erfassten austretenden Objekts 7 wird vorzugsweise als Signatur mit dem Indexwert j=0, also als $A_0$ gespeichert. Die Indexwerte von bereits in der Austrittsliste gespeicherten Austrittssignaturen $A_j$ werden zu $A_{j+1}$ um den Wert eins erhöht. Zudem werden Austrittssignaturen mit einem Indexwert, welcher grösser ist als ein vorbestimmbarer Wert M aus der Austrittsliste gelöscht.

Im anschliessenden Berechnungsschritt 15 werden Ähnlichkeitswerte $C_n$ für $-N \leq n \leq +N$ berechnet. N ist ein vorbestimmbarer Wert, der eine bestimmte Anzahl N an Eintrittssignaturen von Objekten definiert, die vor oder nach dem Objekt mit der Eintrittssignatur $E_L$ aus dem vordefinierten Bereich austreten werden beziehungsweise bereits ausgetreten sind, wobei das Objekt mit der Eintrittssignatur $E_L$ dasjenige Objekt ist, dessen Austritt aufgrund der Länge der Warteschlange L als nächstes erwartet wird. Zur Berechnung der Ähnlichkeitswerte $C_n$ werden jeweils Ähnlichkeitsmasse $U_{mn}$ zwischen einer Austrittssignatur Am und einer Eintrittssignatur $E_{L+m+n}$ berechnet, wobei m von 0 bis M läuft. Die Ähnlichkeitsmasse $U_{mn}$ werden anschliessend zu den Ähnlichkeitswerten $C_n$ aufaddiert. Der Ähnlichkeitswert $C_n$ widerspiegelt somit die gesamte Ähnlichkeit der Austrittssignaturen in der Austrittsliste $A_0$ bis $A_M$ gegenüber den Untergruppen von Eintrittssignaturen von $E_{L+n}$ bis $E_{L+n+m}$ für jedes $-N \leq n \leq +N$.

Im nächsten Schritt 16 erfolgt die Dekrementierung des Wertes L um den Wert eins. Dies trägt dem Umstand Rechnung, dass durch den Austritt des Objektes 7 die Länge L der Warteschlange im vordefinierten Bereich 1 sich um ein Objekt 8 verringert hat.

im anschliessenden Korrckturschritt 17 werden die Ähnlichkeitswerte $C_n$ mit dem Ähnlichkeitswert $C_0$ verglichen. Bei Vorliegen eines Wertes $C_x$ mit Indexwert n=x der eine höhere Ähnlichkeit anzeigt als der Ähnlichkeitswert $C_0$, erfolgt eine Korrektur des Wertes L durch Addition des Indexwertes x. Zeigt ein Ähnlichkeitswert $C_x$ eine höhere Ähnlichkeit an, als der Ähnlichkeitswert $C_0$, liegt eine Verschiebung der Austrittssignaturen in der Austrittsliste gegenüber den Eintrittssignaturen von $E_L$ bis $E_{L+m}$ vor. Dies deutet auf einen Erfassungsfehler eines der beiden Sensoren 4, 5 hin. Da durch den Erfassungsfehler auch der Wert L, der die Länge der Warteschlange wiedergibt, nicht der tatsächlichen Länge der Warteschlange der Objekte 8 im vordefinierten Bereich 1 entspricht, muss dieser korrigiert werden. Die Anzahl an "Plätzen" von Signaturen in der Eintrittsliste, um die die Austrittsliste gegenüber dieser verschoben ist, entspricht dabei dem Zählfehler der Länge L der Warteschlange.

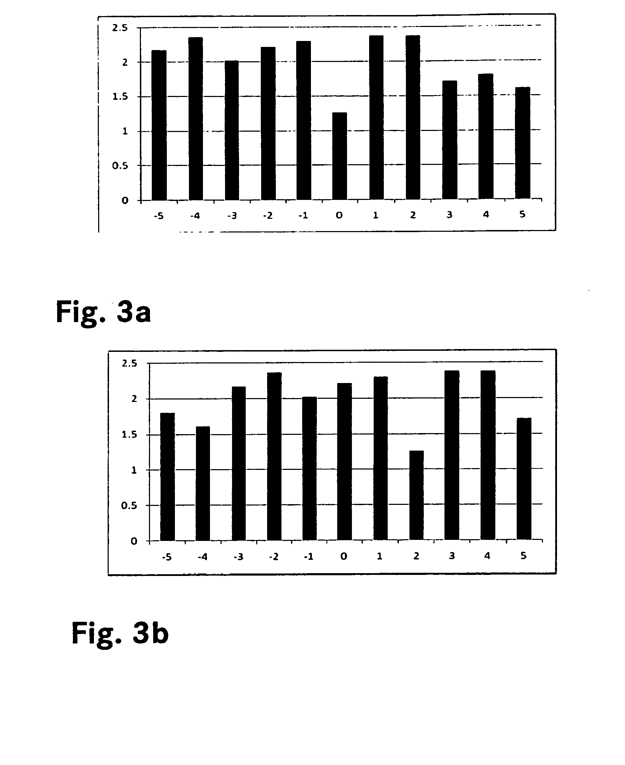

Auf der Figur 3a sind nach dem erfindungsgemässen Verfahren erhaltene, beispielhafte Ähnlichkeitswerte $C_n$ graphisch dargestellt, wobei $-5 \leq n \leq +5$ ist. Der zur Berechnung der Ähnlichkeitsmasse verwendete Algorithmus ergibt für eine gute Übereinstimmung zwischen zwei Signaturen einen kleinen und für eine schlechte Übereinstimmung einen grossen Wert aus. Bei den in der Figur 3a dargestellten, beispielhaften Ähnlichkeitswerten $C_n$ ist gut ersichtlich, dass der Ähnlichkeitswert $C_0$ die höchste Ähnlichkeit anzeigt. Demnach stimmt die Abfolge in der Austrittsliste gespeicherten Austrittssignaturen mit der Reihenfolge der Eintrittssignaturen in der Eintrittsliste überein, womit keine Korrektur des Wertes L nötig ist.

Die Figur 3b zeigt analog zur Figur 3a eine graphische Darstellung beispielhafter Ähnlichkeitswerte $C_n$, bei denen jedoch die Reihenfolge der Austrittssignaturen in der Austrittssequenz um zwei "Plätze" gegenüber den Eintrittssignaturen in der Eintrittsfolge verschoben sind. Dies zeigt der für den Ähnlichkeitswert $C_2$ "bessere" Ähnlichkeitswert gegenüber dem Wert von $C_0$. Demgemäss ist die Länge L der Warteschlange um zwei Objekte zu kurz. Entsprechend wird der Wert L um den Wert 2 korrigiert.

Bei jedem der oben genannten Ausführungsbeispiele kann ein Korrekturalgorithmus eingesetzt werden, um unterschiedliche Lichtverhältnisse am Ein- und Ausgang zu kompensieren. Auch können bei allen Ausführungsbeispielen die Signaturen anhand mehrerer hintereinander aufgenommenen Bildern (frames) berechnet werden, z.B. aus einem Fusionsbild der Bilder.

**Patentansprüche**

1. Verfahren zur Bestimmung der Länge einer Warteschlange von Objekten (8) in einem vordefinierten Bereich (1) mit mindestens einem Eingang (2) und mindestens einem Ausgang (3), umfassend die Schritte:

a) Ermittlung einer spezifischen Eintrittssignatur E von jedem durch den mindestens einen Eingang (2) in den vordefinierten Bereich (1) eintretenden Objekt (6) durch mindestens einen ersten Bildsensor (4);
b) Speicherung der spezifischen Eintrittssignatur E in einer Eingangsliste einer Berechnungseinheit (9) als Eintrittssignatur $E_0$ mit Indexwert i=0, wobei der Indexwert von bereits in der Eingangsliste vorhandenen Eintrittssignaturen $E_l$

Jeweils um eins erhöht wird, und wobei ein die Länge der Warteschlange der Objekte widerspiegelnder Wert L um eins erhöht wird;

c) Ermittlung einer spezifischen Austrittssignatur A eines durch den mindestens einen Ausgang (3) aus dem vordefinierten Bereich (1) austretenden Objekts (7) durch mindestens einen zweiten Bildsensor (5);

d) Speicherung der spezifischen Austrittssignatur A in einer Austrittsliste einer Berechnungseinheit (9) als Austrittssignatur $A_0$ mit Indexwert j=0, wobei der Indexwert von bereits in der Austrittsliste vorhandenen Austrittssignaturen $A_j$ jeweils um eins erhöht wird und Austrittssignaturen $A_j$, welche einen Indexwert j aufweisen, der grösser ist als ein vorbestimmbarer Wert M, aus der Austrittsliste gelöscht werden;

e) Berechnung von Ähnlichkeitswerten $C_n$ für $-N \leq n \leq +N$ durch die Berechnungseinheit (9), wobei N ein vorbestimmbarer Wert ist, der eine bestimmte Anzahl N an Eintrittssignaturen von Objekten, die vor oder nach dem Objekt mit der Eintrittssignatur $E_L$, dessen Austritt aufgrund der Länge der Warteschlange L als nächstes erwartet wird, aus dem vordefinierten Bereich austreten werden beziehungsweise bereits ausgetreten sind, definiert, wobei jeweils Ähnlichkeitsmasse $U_{mn}$ zwischen einer Austrittssignatur $A_m$ und einer Eintrittssignatur $E_{L+m+n}$, wobei m von 0 bis M läuft, berechnet und zu $C_n$ aufaddiert werden;

f) Dekrementierung des Wertes L um den Wert eins;

g) Korrektur des Wertes L durch Vergleich der Ähnlichkeitswerte $C_n$ mit dem Ähnlichkeitswert $C_0$ und bei Vorliegen eines Wertes $C_x$ mit Indexwert n=x der eine höhere Ähnlichkeit anzeigt als der Ähnlichkeitswert $C_0$, Korrektur des Wertes L durch Addition des Indexwertes x.

2. Verfahren gemäss Anspruch 1, **dadurch gekennzeichnet, dass** jeder Ähnlichkeitswert $C_n$ zu einem korrespondierenden Histogrammwert $K_n$ einer Histogrammliste hinzuaddiert und der neue Histogrammwert $K_n$ in der Histogrammliste gespeichert wird, wobei eine Korrektur des Wertes L erst erfolgt, wenn ein Histogrammwert $K_x$ mit Indexwert n=x eine höhere Ähnlichkeit anzeigt als der Histogrammwert $K_0$ durch Korrektur des Wertes L durch Addition des Indexwertes x.

3. Verfahren gemäss einem der Ansprüche 1 oder 2, **dadurch gekennzeichnet, dass** die Berechnung der Ähnlichkeitswerte $C_n$ sowie die Korrektur des Wertes L nicht nach jeder erfassten Austrittssignatur A erfolgt, sondern jeweils nach einer vorbestimmbaren Anzahl an erfassten Austrittssignaturen A, insbesondere immer nach fünf, zehn oder fünfzehn erfassten Austrittssignaturen A.

4. Verfahren gemäss einem der Ansprüche 1 bis 3, **dadurch gekennzeichnet, dass** eine Korrektur des Wertes L nur erfolgt, falls ein Ähnlichkeitswert $C_x$ oder ein Histogrammwert $K_x$ eine höhere Ähnlichkeit anzeigt, welche mindestens um einen vorbestimmbaren Wert Q höher ist, als der Ähnlichkeitswert $C_0$ beziehungsweise der Histogrammwert $K_0$, wobei Q vorzugsweise mindestens eine 1.5-fach höhere Ähnlichkeit anzeigt.

5. Verfahren gemäss einem der Ansprüche 1 bis 4, **dadurch gekennzeichnet, dass** die Objekte (6, 7, 8) Personen sind.

6. Verfahren gemäss einem der Ansprüche 1 bis 5, **dadurch gekennzeichnet, dass** durch die Bildsensoren erfassten Eintrittssignaturen $E_l$ und Austrittssignaturen A Farbsignaturen der Objekte (6, 7) sind, insbesondere Farbmittelwerte der Objekte (6, 7).

7. Verfahren gemäss Anspruch 6, **dadurch gekennzeichnet, dass** die Ähnlichkeitsmasse $U_{mn}$ anhand eines Distanzvektors zwischen der Austrittssignatur $A_m$ und der Eintrittssignatur $E_i$ in einem mehrdimensionalen, insbesondere in einem dreidimensionalen Farbraum berechnet werden.

8. Verfahren gemäss einem der Ansprüche 1 bis 6, **dadurch gekennzeichnet, dass** die Ähnlichkeitsmasse $U_{mn}$ durch einen Earth-Movers-Distance Algorithmus bestimmt werden.

9. Verfahren gemäss einem der Ansprüche 1 bis 8, **dadurch gekennzeichnet, dass** aufgrund der ermittelten Länge der Warteschlange L der Objekte (8) im vordefinierten Bereich (1) eine voraussichtliche Verweilzeit neu in den vordefinierten Bereich eintretender Objekte (6) berechnet und vorzugsweise ausgegeben wird, beispielsweise durch eine Anzeigevorrichtung (10) beim Eingang (2).

10. Verfahren gemäss einem der Ansprüche 1 bis 9, **dadurch gekennzeichnet, dass** für jedes in den vordefinierten Bereich (8) eintretendes Objekt (6) zusätzlich zur Eintrittssignatur $E_l$ die Eintrittszeit $T_i$ gespeichert wird und anhand der gespeicherten Eintrittszeiten $T_i$ und den Austrittszeiten der Objekte (6, 7) eine durchschnittliche Verweilzeit der Objekte (8) im vordefinierten Bereich (1) berechnet und vorzugsweise ausgegeben wird.

11. Verfahren gemäss einem der Ansprüche 1 bis 10, **dadurch gekennzeichnet, dass** Unterschiede der Eintrittssignaturen $E_i$ sowie der Austrittssignaturen $A_m$ aufgrund unterschiedlicher Lichtverhältnisse am Eingang (2) und am Ausgang (3) durch einen Korrekturalgorithmus kompensiert werden.

**12.** Vorrichtung zur Bestimmung der Länge einer Warteschlange von Objekten (8) in einem vordefinierten Bereich (1) mit einem Eingang (2) und einem Ausgang (3) gemäss einem Verfahren nach einem der Ansprüche 1 bis 11, umfassend mindestens zwei Bildsensoren (4, 5), wobei die Bildsensoren (4, 5) derart angeordnet sind, dass wenigstens ein erster Bildsensor (4) durch den mindestens einen Eingang (2) in den vordefinierten Bereich (1) eintretende Objekte (6) und wenigstens ein zweiter Bildsensor (5) durch den mindestens einen Ausgang (7) aus den vordefinierten Bereich (1) austretende Objekte (7) erfasst sowie wenigstens eine Berechnungseinheit (9), welche anhand der erfassten ein- und austretenden Objekte (6, 7) die Länge der Warteschlange L der Objekte (8) im vordefinierten Bereich (1) berechnet, wobei die Berechnungseinheit (9) oder die Bildsensoren (4, 5) derart konfiguriert sind, dass für jedes ein- und austretende Objekt (6, 7) eine spezifische Signatur ermittelt wird.

**13.** Vorrichtung gemäss Anspruch 12, **dadurch gekennzeichnet, dass** die Bildsensoren (4, 5) digitale Kameras sind.

**14.** Vorrichtung gemäss einem der Ansprüche 12 oder 13, **dadurch gekennzeichnet, dass** die wenigstens eine Berechnungseinheit (9) in mindestens einem der Bildsensoren (4, 5) integriert ist.

**15.** Verwendung eines Verfahrens gemäss einem der Ansprüche 1 bis 11 zum Betrieb einer Vorrichtung, insbesondere gemäss einem der Ansprüche 12 oder 13, zur Bestimmung der Länge L einer Warteschlange von Objekten (8) in einem vordefinierten Bereich (1).

**Claims**

**1.** Method for determining the length of a queue of objects (8) in a predefined region (1) having at least one entrance (2) and at least one exit (3), comprising the steps of;

a) determining with the aid of at least one first image sensor (4) a specific entry signature E of each object (6) entering the predefined region (1) through the at least one entrance (2);

b) storing the specific entry signature E in an entry list of a calculation unit (9) as entry signature $E_0$ with index value $i = 0$, the index value of entry signatures $E_i$ already present in the entry list respectively being increased by one, and a value L reflecting the length of the queue of the objects being increased by one;

c) determining with the aid of at least one second image sensor (5) a specific exit signature A of an object (7) exiting the predefined region (1) through the at least one exit (3);

d) storing the specific exit signature A in an exit list of a calculation unit (9) as exit signature $A_0$ with index value $j = 0$, the index value of exit signatures $A_j$ already present in the exit list respectively being increased by one, and the exit signatures $A_j$ which have an index value $j$ that is greater than a predeterminable value M being deleted from the exit list;

e) calculating similarity values $C_n$ for $-N \leq n \leq +N$ with the aid of the calculation unit (9), N being a predeterminable value which defines a specific number N of entry signatures of objects which, before or after the object with the entry signature $E_L$ whose exit is next expected on the basis of the length of the queue L, will exit or have already exited the predefined region, similarity metrics $U_{mn}$ respectively being calculated between an exit signature $A_m$ and an entry signature $E_{L+m+n}$, m running from 0 to M, and added to $C_n$;

f) decrementing the value L by the value one;

g) correcting the value L by comparing the similarity values $C_n$ with the similarity value $C_0$, and correcting the value L by adding the index value x given the presence of a value $C_x$ with index value $n = x$ that indicates a higher similarity than the similarity value $C_0$.

**2.** Method according to Claim 1, **characterized in that** each similarity value $C_n$ is added to a corresponding histogram value $K_n$ of a histogram list, and the new histogram value $K_n$ is stored in the histogram list, the value L being corrected only once a histogram value $K_x$ with index value $n = x$ indicates a higher similarity than the histogram value $K_0$, by correcting the value L by adding the index value x.

**3.** Method according to either of Claims 1 and 2, **characterized in that** the calculation of the similarity values $C_n$ and the correction of the value L are performed not after each acquired exit signature A, but respectively after a predeterminable number of acquired exit signatures A, in particular always after five, ten or fifteen acquired exit signatures A.

**4.** Method according to one of Claims 1 to 3, **characterized in that** a correction of the value L is performed only if a similarity value $C_x$ or a histogram value $K_x$ indicates a higher similarity which is at least higher by a predeterminable value Q than the similarity value $C_0$ or the histogram value $K_0$, respectively, Q preferably indicating at least a 1.5 times higher similarity.

**5.** Method according to one of Claims 1 to 4, **charac-**

**terized in that** the objects (6, 7, 8) are people.

6. Method according to one of Claims 1 to 5, **characterised in that** entry signatures $E_i$ and exit signatures A acquired by the image sensors are color signatures of the objects (6, 7, 8), in particular color mean values of the objects (6, 7).

7. Method according to Claim 6, **characterized in that** the similarity metrics $U_{mn}$ are calculated using a distance vector between the exit signature $A_m$ and the entry signature $E_i$ in a multidimensional, in particular in a three-dimensional color space.

8. Method according to one of Claims 1 to 6, **characterized in that** the similarity metrics $U_{mn}$ are determined by an earth-movers-distance algorithm.

9. Method according to one of Claims 1 to 8, **characterized in that**, on the basis of the determined length of the queue L of the objects (8) in the predefined region (1), an estimated dwell time is calculated for objects (6) newly entering the predefined region and is preferably output, for example by a display device (10) at the entrance (2).

10. Method according to one of Claims 1 to 9, **characterized in that** in addition to the entry signature $E_i$ the entry time $T_i$ is stored for each object (6) entering the predefined region (8), and an average dwell time of the objects (8) in the predefined region (1) is calculated using the stored entry times $T_i$ and the exit times of the objects (6, 7) and preferably output.

11. Method according to one of Claims 1 to 10, **characterized in that** differences of the entry signatures $E_i$ and the exit signatures $A_m$ are compensated by a correction algorithm on the basis of different lighting conditions at the entrance (2) and at the exit (3).

12. Device for determining the length of a queue of objects (8) in a predefined region (1) having an entrance (2) and an exit (3) in accordance with a method according to one of Claims 1 to 11, comprising at least two image sensors (4, 5), the image sensors (4, 5) being arranged in such a way that at least one first image sensor (4) detects objects (6) entering the predefined region (1) through the at least one entrance (2), and at least one second image sensor (5) detects objects (7) exiting the predefined region (1) through the at least one exit (7), and comprising at least one calculation unit (9) which calculates the length of the queue L of the objects (8) in the predefined region (1) using the detected entering and exiting objects (6, 7), the calculation unit (9) or the image sensors (4, 5) being configured in such a way that a specific signature is determined for each entering and exiting object (6, 7).

13. Device according to Claim 12, **characterized in that** the image sensors (4, 5) are digital cameras.

14. Device according to either of Claims 12 and 13, **characterized in that** the at least one calculation unit (9) is integrated in at least one of the image sensors (4, 5).

15. Use of a method according to one of Claims 1 to 11 to operate a device, in particular according to either of Claims 12 and 13, in order to determine the length L of a queue of objects (8) in a predefined region (1).

**Revendications**

1. Procédé de détermination de la longueur d'une file d'attente d'objets (8) dans une zone (1) prédéfinie avec au moins une entrée (2) et au moins une sortie (3), comprenant les étapes suivantes :

   a) détermination d'une signature d'entrée E spécifique de chaque objet (6) entrant dans la zone prédéfinie (1) à travers l'au moins une entrée (2) par le biais d'au moins un premier capteur d'image (4) ;
   b) mémorisation de la signature d'entrée E spécifique dans une liste d'entrées d'une unité de calcul (9) sous la forme d'une signature d'entrée $E_0$ avec valeur indexée i=0, la valeur indexée des signatures d'entrée $E_i$ déjà présentes dans la liste d'entrées étant respectivement augmentée de un et une valeur L reflétant la longueur de la file d'attente des objets étant augmentée de un ;
   c) détermination d'une signature de sortie A spécifique d'un objet (7) sortant à travers l'au moins une sortie (3) de la zone prédéfinie (1) par le biais d'au moins un deuxième capteur d'image (5) ;
   d) mémorisation de la signature de sortie A spécifique dans une liste de sorties d'une unité de calcul (9) sous la forme d'une signature de sortie $A_0$ avec valeur indexée J=0, la valeur indexée des signatures de sortie $A_j$ déjà présentes dans la liste de sorties étant respectivement augmentée de un et les signatures de sortie $A_j$ présentant une valeur indexée j supérieure à une valeur M prédéfinie étant supprimées de la liste de sorties ;
   e) calcul de valeurs de similarité $C_n$ pour $-N \leq n \leq +N$ par l'unité de calcul (9), N étant une valeur prédéfinissable définissant un nombre N défini de signatures d'entrée d'objets sortants et/ou déjà sortis de la zone prédéfinie avant ou après l'objet avec la signature d'entrée $E_L$ dont la sortie est attendue comme suivante sur la base de la longueur de la file d'attente L, une mas-

se de similarité $U_{mn}$ étant respectivement calculée et ajoutée à $C_n$ entre une signature de sortie $A_m$ et une signature d'entrée $E_{L+m+n}$, m allant de 0 à M ;

f) décrémentation de la valeur L de la valeur de un ;

g) correction de la valeur L par comparaison des valeurs de similarité $C_n$ avec la valeur de similarité $C_0$ et en présence d'une valeur $C_x$ avec valeur indexée n=x affichant une valeur supérieure à la valeur de similarité $C_0$, correction de la valeur L par addition de la valeur indexée x.

2. Procédé selon la revendication 1, **caractérisé en ce que** chaque valeur de similarité $C_n$ est ajoutée à une valeur d'histogramme $K_n$ correspondante d'une liste d'histogrammes et que la nouvelle valeur d'histogramme $K_n$ est mémorisée dans la liste d'histogrammes, une correction de la valeur L se produisant d'abord lorsque la valeur d'histogramme $K_x$ avec valeur indexée n=x, indique une similarité supérieure à la valeur d'histogramme $K_0$ par correction de la valeur L par addition de la valeur indexée x.

3. Procédé selon l'une quelconque des revendications 1 ou 2, **caractérisé en ce que** le calcul des valeurs de similarité $C_n$ ainsi que la correction de la valeur L ne se produit pas après chaque signature de sortie A détectée mais respectivement après un nombre prédéfinissable de signatures de sortie A détectées, notamment toujours cinq, dix ou quinze signatures de sortie A détectées.

4. Procédé selon l'une quelconque des revendications 1 à 3, **caractérisé en ce qu'**une correction de la valeur L ne se produit que si une valeur de similarité $C_x$ ou une valeur d'histogramme $K_x$ indique une similarité supérieure d'au moins une valeur Q prédéfinissable à la valeur de similarité $C_0$ et/ou à la valeur d'histogramme $K_0$, Q indiquant de préférence au moins une similarité 1,5 fois supérieure.

5. Procédé selon l'une quelconque des revendications 1 à 4, **caractérisé en ce que** les objets (6, 7, 8) sont des personnes.

6. Procédé selon l'une quelconque des revendications 1 à 5, **caractérisé en ce que** les signatures d'entrée $E_i$ et les signatures de sortie A détectées par les capteurs d'image sont des signatures de couleur des objets (6, 7), notamment des valeurs moyennes de couleur des objets (6, 7).

7. Procédé selon la revendication 6, **caractérisé en ce que** la masse de similarité $U_{mn}$ est calculée à l'aide d'un vecteur de distance entre la signature de sortie $A_m$ et la signature d'entrée $E_i$ dans un espace coloré pluridimensionnel, notamment, tridimensionnel.

8. Procédé selon l'une quelconque des revendications 1 à 6, **caractérisé en ce que** la masse de similarité $U_{mn}$ est définie par un algorithme de type distance de niveleuse.

9. Procédé selon l'une quelconque des revendications 1 à 8, **caractérisé en ce que** sur la base de la longueur calculée de la file d'attente L des objets (8) dans la zone prédéfinie (1), un temps d'attente prévu est calculé pour des nouveaux objets (6) entrants dans la zone prédéfinie et de préférence transmis, par exemple par un dispositif d'affichage (10) lors de l'entrée (2).

10. Procédé selon l'une quelconque des revendications 1 à 9, **caractérisé en ce que** pour chaque objet (6) entrant dans la zone prédéfinie (8), l'heure d'entrée Ti est mémorise en sus de la signature d'entrée $E_i$ et que un temps d'attente moyen des objets (8) dans la zone prédéfinie (1) est calculé à l'aide des heures d'entrée $T_i$ mémorisées et des heures de sortie des objets (6, 7) et que celui-ci est de préférence transmis.

11. Procédé selon l'une quelconque des revendications 1 à 10, **caractérisé en ce que** des différences des signatures d'entrée $E_i$ ainsi que des signatures de sortie $A_m$ sur la base de différents rapports de lumière à l'entrée (2) et à la sortie (3) sont compensées par un algorithme de correction.

12. Dispositif de détermination de la longueur d'une file d'attente d'objets (8) dans une zone (1) prédéfinie avec une entrée (2) et une sortie (3) selon un procédé selon l'une quelconque des revendications 1 à 11, comprenant au moins deux capteurs d'image (4, 5), les capteurs d'image (4, 5) étant disposés de telle sorte qu'au moins un premier capteur d'image (4) détecte les objets (6) entrants dans la zone prédéfinie (1) à travers l'au moins une entrée (2) et qu'au moins un deuxième capteur d'image (5) détecte les objets (7) sortants de la zone prédéfinie (1) à travers l'au moins une sortie (7) ainsi qu'au moins une unité de calcul (9) calculant, à l'aide des objets (6, 7) entrants et sortants détectés, la longueur de la file d'attente L des objets (8) dans la zone prédéfinie (1), l'unité de calcul (9) ou les capteurs d'image (4, 5) étant configurés de telle sorte que pour chaque objet (6, 7) entrant ou sortant, une signature spécifique est déterminée.

13. Dispositif selon la revendication 12, **caractérisé en ce que** les capteurs d'image (4, 5) sont des caméras numériques.

14. Dispositif selon l'une quelconque des revendications 12 ou 13, **caractérisé en ce que** l'au moins une unité de calcul (9) est intégrée dans au moins un des capteurs d'image (4, 5).

15. Utilisation d'un procédé selon l'une quelconque des revendications 1 à 11 pour faire fonctionner un dispositif, notamment selon l'une quelconque des revendications 12 ou 13, en vue de déterminer la longueur L d'une file d'attente d'objets (8) dans une zone (1) prédéfinie.

**Fig. 1**

**Fig. 2**

# Fig. 3a

# Fig. 3b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7167576 B
- EP 2104077 A
- WO 2005062714 A
- JP 2001291184 A
- WO 2010055286 A

**In der Beschreibung aufgeführte Nicht-Patentliteratur**

- **KWONG et al.** Aterial travel time estimation based on vehicle reidentification using wireless magnetic sensors. *Transportation Research, Part C, Emerging Technologies,* 2009
- **COIFMAN et al.** Vehicle reidentification and travel time measurement, part 1: congested freeways. *IEEE Intelligent Transportation Systems Proceedings,* 2001
- **Y.RUBNER et al.** The Earth Mover's Distance as a metric for Image Retrieval. *International Journal of Computer Vision,* 2000, vol. 40 (2), 99-121
- **B.PROSSER et al.** Multi-camera Matching under Illumination Change over Time. *Worshop on Mulit-camera and Multi-modal Sensor Fusion Algorithms and Applications - M2SFA2,* 2008